# EUROPEAN PATENT APPLICATION

(11) **EP 2 000 788 A1**
(43) Date of publication of application: **10.12.2008**
(21) Application number: 08104255.8
(22) Date of filing: 04.06.2008
(51) Int. Cl.: G01K 17/10

(54) **Energy Calculator with Installation Error Detection**

(30) Priority: 06.06.2007 EP 07011107
(71) Applicant: KAMSTRUP A/S, 8660 Skanderborg (DK)
(72) Inventor: Drachmann, Jens, 8260, Viby J (DK)
(74) Representative: Plougmann & Vingtoft A/S

(57) **Abstract**

The invention provides an energy calculator, e.g. for calculating an amount of consumed energy (H), such as an amount of heat energy or such as an amount of cooling energy. The calculator includes inputs (T1_in, T2_in) for input from temperature sensors T1, T2, and an input (F_in) for a flow rate from a flow meter (F). A processor unit (PU) calculates the consumed heat (H) based on data from the temperature sensors (T1, T2) and data from the flow meter (F). The calculator further receives additional data (FD_in) from flow meter (F), and the processor unit (PU) then detects an installation error based on this additional data. Especially, this additional data may be a flow medium temperature sensed by the flow meter (F), or a flow direction sensed by the flow meter (F). Such data allows detection of installation errors regarding the flow meter (F). Preferably a detected installation error is communicated via a display. The additional data may be received by the calculator on the same communication line as used for flow rate data. For ultrasonic flow meters (F) temperature data may be derived without the need for a separate temperature sensor by using data available in connection with the flow rate measurement. Temperatures from the sensors (T1, T2) may further be used in the detection of installation errors. The calculator is advantageous for heat meters since automatic detection of errors during installation will help correct installation of heat meter systems.

## Description

### Field of the invention

The invention relates to the field of energy consumption meters, e.g. heat and cooling meters. Especially, the invention provides an energy consumption calculator arranged to detect errors in the installation of components connected to the calculator. In addition, the invention provides a heat meter with such calculator.

### Background of the invention

Measurement of heat energy consumed by a consumer connected to a heat distribution system normally includes two temperature sensors for measuring liquid temperature on respective flow pipe ("hot") to and return pipe ("cold") from the consumer. Further, a flow meter is required to measure liquid flow on either the flow pipe or the return pipe. Most often such heat meter system has a heat calculator unit including a microprocessor arranged to calculate the consumed heat energy. For practical installation of such heat meter, the flow meter and the two temperature sensors must be mounted on the piping, and temperature sensors and flow meters must be connected to the heat calculator unit. Further, some types of flow meters are asymmetric and thus require a specific flow direction for correct flow results.

For the heat calculator unit to be able to calculate the consumed heat as intended, the installed components must be correctly configured, i.e. temperature sensors and flow meter must be mounted according to the assumptions made during design of the calculation procedure in the heat calculator unit. The possible installation errors are: 1) the temperature sensors are reversed, i.e. both mounted on the opposite pipe of the intended pipe, 2) the flow meter is mounted on the opposite pipe of the intended one, and 3) the flow meter is mounted with a flow direction opposite the intended direction, or combinations of these errors.

Installation errors will lead to incorrect heat energy results. Some types of installation errors may lead to complete malfunction of the heat meter, and thus such errors will most often be detected during installation by the installing person.

However, some installation errors only lead to small errors in the heat energy results, errors that are too small to detect during installation and normal operation.

In case a large installation error is not detected during installation, the require re-installation becomes expensive since an installing person must make a new appointment with the consumer and come to perform the re-installation. In case a small installation error is not detected during installation and immediately repaired, such small installation error will most likely not be discovered, and thus, the heat meter will produce incorrect heat energy results throughout its life time.

US 2006/155515 describes a measurement device, e.g. a flow meter, with the purpose of reliably preclude measurement errors resulting from incorrect installation. A characteristic variable is calculated from a time series of the measurement signals of a measurement device and is compared with previously recorded reference values. This is used to automatically generate a message as to whether the measurement device has been installed correctly or not. Thus, the method US 2006/155515 requires observation of a time series of measurement data, and it is intended to detect installation errors such as a tilted installation, curves in the pipeline, pulsating fluid flow, or vibration of the pipeline. The types of errors described above are not addressed by US 2006/155515.

### Summary of the invention

Thus, according to the above explanation, it is an object of the present invention to provide an energy calculator capable of detecting an installation error due to a human error during installation of e.g. a heat meter.

This object is obtained in a first aspect of the invention providing an energy calculator for calculating an amount of consumed energy, the calculator comprising
- first and second temperature inputs arranged to receive respective first and second data representing temperatures from respective associated temperature sensors,
- a flow input arranged to receive data representing a flow from an associated flow meter, and
- a processor unit arranged to calculate the amount of consumed energy based on data received via the first and second temperature inputs and data received via the flow input,
wherein the energy calculator is arranged to receive additional data from the associated flow meter, and wherein the processor unit is arranged to detect an installation error based on the additional data from the associated flow meter.

Such energy calculator is advantageous as part of a heat meter, since the calculator can detect installation errors via additional data received from the associated flow meter. Preferably, the calculator is arranged to generate an error signal upon detection of an installation error, e.g. the error signal can be used to indicate a detected installation error on a display, e.g. an LCD screen, via light using an LED, or via an acoustic signal, so as to inform the installing person accordingly upon testing the heat meter after installation. Especially, a display arranged to display the calculated amount of energy may be used to further function installation error indicator. Thereby installation errors can be remedied already at the installation stage before the heat meter enters normal operation. Thus, expensive re-installation can be saved, and furthermore otherwise not detected malfunction resulting in inaccurate measurements can be avoided.

It is appreciated that 'consumed energy' is to be understood including both positive and negative amounts of consumed energy. Thus, the energy calculator may be used both for heat meters such as for use in district heating systems, as well as for cooling meters such as for use in district cooling systems.

In some embodiments the calculator only indicates if an installation error is detected, while in other embodiments the calculator is arranged to indicate different types of errors that will help the installing person to quickly remedy the specific error, e.g. with a display showing messages such as: "Flow meter is reversed", or "Temperature sensors are reversed", "Flow meter installed on wrong pipe". More alternatively, the display may be arranged to display an error code in case an installation error is detected. Especially, the error code may include a number indicating the type of error, such as e.g. "E67".

The additional data from the flow meter may include data representing a flow medium temperature detected by the flow meter itself or by a separate temperature sensor positioned in the flow meter or at least in connection with the flow meter, i.e. on the same pipe as the flow meter. E.g. the communication between flow meter and calculator may be as described in PA 2003 01411 by Kamstrup. The flow medium temperature is then used by the calculator in the detection of an installation error. It is appreciated that by 'data representing a flow medium temperature' is understood any direct or indirect data or value that can be used by the energy calculator to determine the medium temperature at the position where the flow meter is installed. It may be a direct value representing the medium temperature in degrees, or it may be a value requiring prior knowledge to convert to the medium temperature. An example on the latter is an ultrasonic flow meter where a measure of an electric capacitance of a piezoelectric ultrasound transducer is measured and included in the additional data. By appropriate conversion, such data from an ultrasonic flow meter can be used to calculate the medium temperature, in case the energy calculator has in advance information about the specific flow meter to perform the calculation.

Knowledge of the temperature of the flow medium at the position where the flow meter is positioned can be used to detect if the flow meter is installed on the wrong pipe. This can be done by comparing this temperature with the first and second temperatures and thereby determine if the flow meter is installed at the same pipe as the first or second temperature sensor. In case it is determined that the position of the flow meter is different from the predetermined configuration, an installation error has been detected. Another way of detecting if the flow meter is installed on the wrong pipe is to simply compare the flow medium temperature with a predetermined temperature value indicating either the desired "cold" or "hot" position of the flow meter, and in case the difference between the predetermined temperature and the flow medium temperature exceeds a threshold value, an installation error is detected. In this way, the installation error detection does not involve the first and second temperatures.

In case an ultrasound flow meter is used, the additional data may include data representing at least one of: a sound velocity, and a sound transmission time associated with the data representing the flow. This sound velocity or sound transmission time can then be used by the calculator to calculate a measure of flow medium temperature at the position where the flow meter is installed, and thus these data can be used in the detection of an installation error as described above.

Another type of installation error can be detected if the additional data includes data representing a direction of the flow measured by the flow meter. E.g. this additional data may simply be indicated as a sign of the flow rate measured by the flow meter. Alternatively, the flow meter may simply indicate a flow rate of zero, in case the flow direction is wrong. Thus, in case of asymmetric flow meters the flow direction information can be used to detect if the flow meter is erroneously installed, i.e. if it is installed in the wrong flow direction.

The additional data from the flow meter can be received by the calculator via the flow input or via a separate input, or via a combination of the two. Especially, it may be preferred that the calculator is arranged to receive the data representing a flow and the additional data on one common line. It may also be preferred that the flow input is arranged to receive the data representing a flow and the additional data as a wireless Radio Frequency signal.

In preferred embodiments, the calculator is arranged to take into account at least one of the first and second temperature data in the detection of an installation error. Thus, taking the temperatures measured by the temperature sensors into account, and with flow medium temperature data from the flow meter, it is possible to derive if the flow meter is positioned on the wrong pipe, such as described above. Further, comparing the first and second temperatures, it is possible to detect if the first and second temperature sensors have been reversed, i.e. both installed on the wrong pipe compared to what is intended. This type of installation error can be detected by the calculator e.g. by determining the sign of the difference between the first and second temperatures.

In preferred embodiments, the additional data includes data representing a flow direction and data representing a flow medium temperature measured by the flow meter, and thus both of the flow direction and flow medium temperature can be used to detect an error in installation of the flow meter. Further, one of or both of the first and second temperature data may be taken into account in the detection of an installation error.

In one class of embodiments, the calculator, or more specifically the processor unit, is arranged to reconfigure a calculation procedure for calculating the amount of consumed energy based on a detected installation error. Thus, instead of indicating an installation error, it is possible to change the calculation procedure according to the detected installation error. E.g. if it is detected that the temperature sensors are reversed, this is easily taken into account by also reversing data in the consumed energy calculation formula. The calculation formula can also be reconfigured to compensate for the flow meter being installed on the wrong pipe. However, in case an asymmetric flow meter is installed with reversed flow direction, it may be preferred to indicate an installation error instead of changing the calculation formula, since it may not be possible to obtain precise measurements from the flow meter in reverse mode, and thus it needs to be re-installed.

In preferred embodiments, the flow input is arranged for two-way communication with the associated flow meter. E.g. the calculator may be programmed to, during test, to request the additional data from the flow meter so as to be able to use this additional data to detect possible installation errors, while this additional data may not be desired continuously during normal operation.

In a second aspect, the invention provides heat meter for determining an amount of consumed heat, the heat meter including
- a flow meter arranged to measure a flow and generate data representing the flow, the flow meter further being arranged to generate additional data,
- first and second temperature sensors arranged to measure respective first and second temperatures and generate respective first and second data representing the respective first and second temperatures, and
- an energy calculator according to the first aspect, wherein the calculated amount of consumed energy represents the amount of consumed heat.

By 'heat' is understood an amount of energy with either positive or negative sign. Thus, it is appreciated that the second aspect includes a 'cooling meter' as well, e.g. a cooling meter for use in a district cooling system in the same way as the heat meter can be used in a district heating system.

The flow meter may include a temperature sensor arranged to measure a flow medium temperature where the flow is measured, and wherein the additional data flow meter is arranged to include data representing the flow medium temperature in the additional data. This flow medium temperature can then be used by the energy consumption calculator to detect an installation error, as described in connection with the first aspect.

The flow meter may be an ultrasonic flow meter. Especially, one ultrasound transducer of the flow meter may be used to determine data representing a flow medium temperature. Alternatively, the ultrasonic flow meter may be arranged to include at least one of: data representing an ultrasound velocity associated with the flow and data representing an ultrasound transit time associated with the flow, in the additional data. The energy calculator may then be arranged to determine a measure of flow medium temperature based on the at least one of: data representing an ultrasound velocity associated with the flow and data representing an ultrasound transit time associated with the flow, in the additional data, and wherein the detection of an installation error is based on the measure of flow medium temperature.

The energy calculator and the flow meter are preferably arranged for interconnection by one line for transfer of data representing the flow and the additional data, e.g. a serial communication line.

Preferably, the heat meter includes a communication module arranged to transmit data representing a detected installation error to an external receiver. The communication module may further be arranged to transmit data representing the amount of consumed heat. The communication module is preferably arranged to transmit data via at least one of: wireless Radio Frequency signals, an electric supply net, a dedicated communication wire, or a combination thereof.

It is appreciated that any sub aspect mentioned in connection with the first aspect may in any way be combined with the second aspects and with any of the sub aspects mentioned in connection with the second aspect.

### Brief description of drawings

In the following, the invention will be described in more details by referring to embodiments illustrated in the accompanying drawings, of which
Fig. 1 illustrates schematic elements of a preferred heat calculator and associated temperature sensors and flow meter installed on flow pipe and return pipe on a consumer's heat supply system, and
Fig. 2 illustrates schematic elements of a preferred heat meter,

### Detailed description of the invention

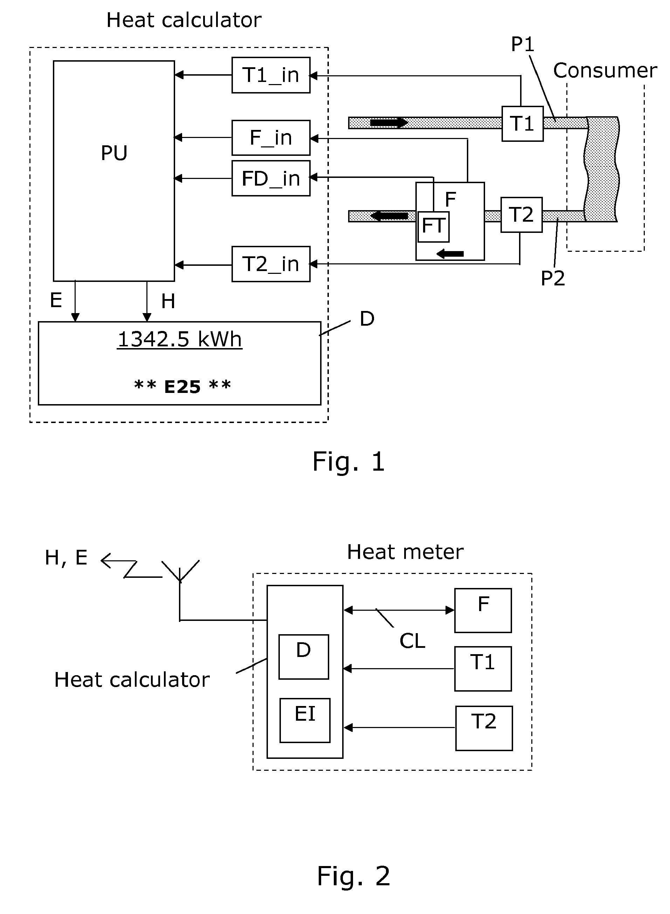

Fig. 1 illustrates schematic elements of an heat calculator embodiment being part of a heat meter system. The heat calculator includes a processor unit PU that calculates an amount of consumed heat H based on data measured by the two temperature sensors T1, T2 positioned on respective flow pipe P1 and return pipe P2 of the heat supply system to the consumer, and based on a flow rate measured by a flow meter F, preferably an ultrasonic flow meter.

The calculator has separate inputs for connection to the two temperature sensors T1_in, T2_in, and an input F_in for connection to the flow meter F to receive flow rate data. Further, in this embodiment, the calculator has a separate input FD_in to receive additional data from the flow meter F. In particular, it is illustrated that the flow meter F includes a temperature sensor FT arranged to measure a flow medium temperature at the position of the flow meter F, and to provide this sensed temperature to the calculator via the separate data input FD_in. Thus, with this temperature, the calculator can determine if the flow meter F is installed on the flow pipe P1 or the return pipe P2, and thereby detect if the flow meter is installed on the pipe that it is intended for according to the installation scheme on which the energy calculation procedure is based. If not, the processor unit detects an installation error, and an installation error signal E is generated.

In the embodiment of Fig. 1, the calculator includes a display that receives the calculated amount of heat energy H and the installation error signal E, and an example of a display text is shown accordingly. As seen, the display shows the current amount of heat energy in one line and in another line the display indicates with text that installation error type No. 2 has been detected, thereby informing an installing person how to re-install the system accordingly.

In case of an ultrasonic flow meter F, the temperature sensor FT may be an integrated part of the flow meter, since a measure of the flow medium temperature may be derived from elements or data involved in the ultrasonic flow measurement. For example, an ultrasound velocity or an ultrasound transit time associated with the ultrasound flow rate measurement may be used as an indirect measure of the flow medium temperature. Thus, the ultrasound velocity or ultrasound transit time may be communicated to the calculator, and the calculator can then calculate a flow medium temperature associated with the flow meter F position, and thereby the calculator has obtained information about which of the pipes P1, P2 the flow meter F is installed. Hereby, an additional temperature sensor element can be saved, thus resulting in a less complicated flow meter with fewer components.

On the flow meter F an arrow indicates that the flow meter F is asymmetric and therefore configured for flow in one direction only. If the flow direction is reversed, it produces inaccurate flow data. In preferred embodiments, the calculator is arranged to receive additional data from the flow meter F indicating the actual flow direction, e.g. by a sign in addition to the flow rate data. This allows the calculator to produce an installation error signal E in case the flow direction is opposite to the desired direction.

Fig. 2 illustrates schematic elements of a heat meter with a heat calculator, two temperature sensors T1, T2 and a flow meter F. In the illustrated embodiment, the bi-directional arrows on the communication line CL between flow meter F and calculator indicate that calculator and flow meter F are configured for two-way communication on one single communication line CL. Thus, one single line CL is used to transmit flow data as well as additional data from the flow meter F, thereby providing a simple connection with only one cable which allows easy installation. Alternatively, the connection line CL may be implemented in a wireless form, e.g. using Radio Frequency signals.

Especially, the flow meter F may transmit a flow rate in the form of pulses on the communication line CL, one pulse for each unit of flow volume. The calculator can then request from the flow meter F, e.g. during start up test, temperature data indicating flow medium temperature where the flow meter F is installed. The flow meter F then responds with data indicating the temperature, either in a direct form or in an indirect form as described above for an ultrasonic flow meter F.

The heat calculator includes a display D, e.g. an LCD type display, for displaying a value representing the calculated consumed heat energy. Further, the calculator includes an installation error indicator EI, e.g. the installation error indicator is included in the display D, e.g. the display D may be capable of displaying text messages indicating one or more types of installation errors.

The heat calculator may be arranged to perform a predetermined procedure, during or after installation, in order to guide the installing person through a number of steps in order to ensure proper operation of e.g. a heat meter in which it is included. An example of such steps after installation, may be the following (with the active part indicated in brackets):
1) Start a heat consuming activity, e.g. turn on a radiator (installing person).
2) Start to perform a heat consumption test measurement (meter).
3) Wait a predetermined period of time, e.g. 30 seconds (installing person).
4) Wait for a keypress to perform an installation error detection based on the data obtained from the test measurement (meter).
5) Perform an installation error detection (meter).
6) Display possible types of detected errors, or display that no errors have been detected if this is the case (meter).

In case, an installation error is detected, the heat calculator may wait for a keypress from the installing person indicating that the error has been remedied, and the procedure can then be repeated starting from step 1). In case no installation error has been detected, the heat calculator may automatically switch to normal operation mode, or it may wait for a keypress to do so.

Further, Fig. 2 shows an antenna connected to the calculator. Thus, in the illustrated embodiment the heat calculator includes a communication module arranged for wireless Radio Frequency communication of the calculated amount of consumed heat energy H so as to allow remote reading of the heat meter. Further, the heat calculator may be arranged to transmit an installation error signal E so as to allow remote monitoring of installation status of the heat meter.

Remote monitoring of installation status of the heat meter is advantageous in a number of applications. E.g. the installation status may be monitored remotely in case it is for some reason not possible to perform a verification of the installation immediately after installation, when the installing person is on-site. This may be the case when installing a heat or cooling meter in a new building not yet connected to the cooling or heating net, or if for some other reason it is not possible to obtain a sufficient flow or temperature difference between flow pipe and return pipe, especially in cooling systems, to determine a reliable installation test as described above. In such cases the heat or cooling meter may be arranged to perform a verification of the installation, when an appropriate operating condition therefore is established, and the meter can then communicate an error signal E to a remote station, e.g. at the provider, indicating installation status and any type of installation error, if any. If a crucial installation error is detected, a person can be sent to the consumer and correct the error.

In some cases a misplaced flow meter F may still result in a calculated consumed energy H with an acceptable precision, if the temperature difference between flow pipe and return pipe is low, such as is often the case in cooling systems. E.g. a 10 °C difference results in a calculated consumed energy H error of less than 0.5 %, and thus even though such error is detected, it may not be necessary to perform any immediate action to remedy the error, and it may even not be crucial to determine if the flow meter is correctly positioned. However, still it is preferred that the flow meter F is capable of determining the liquid temperature with a precision better than 10 °C, since this is sufficient to determine the position of the flow meter in cases where the two precision temperature sensors T1, T2 determine a temperature difference larger than 10 °C, meaning that the flow meter position is critical with respect to measurement precision.

Further, remote monitoring of the heat or cooling meter may be performed at regular intervals during the lifetime of the meter. Especially, with the described energy calculator and meter embodiments where the additional data from the flow meter F includes a flow medium temperature detected by the flow meter F, this additional temperature can be used to detect a defect in at least one of the temperature sensors T1, T2, namely the one placed at the same pipe as the flow meter F. If a exceeding such a temperature difference above a predetermined threshold is observed, the meter may be arranged to communicate an error signal to the remote station indicating which temperature sensor is detect, so as to allow activation of a repair of the defect temperature sensor. Alternatively, if such temperature sensor error has been detected, the meter may store this error in a status memory, and the remote station may then remotely request a reading of the status memory at regular intervals.

To sum up: the invention provides an energy calculator, e.g. for calculating an amount of consumed energy H, such as an amount of heat energy, or such as an amount of cooling energy. The calculator includes inputs T1_in, T2_in for input from temperature sensors T1, T2, and an input F_in for a flow rate from a flow meter F. A processor unit PU calculates the consumed heat H based on data from the temperature sensors T1, T2 and data from the flow meter F. The calculator further receives additional data FD_in from flow meter F, and the processor unit PU then detects an installation error based on this additional data. Especially, this additional data may be a flow medium temperature sensed by the flow meter F, or a flow direction sensed by the flow meter F. Such data allows detection of installation errors regarding the flow meter F. Preferably a detected installation error is communicated via a display D. The additional data may be received by the calculator on the same communication line as used for flow rate data. For ultrasonic flow meters F temperature data may be derived without the need for a separate temperature sensor by using data available in connection with the flow rate measurement. Temperatures from the sensors T1, T2 may further be used in the detection of installation errors. The calculator is advantageous for heat meters since automatic detection of errors during installation will help correct installation of heat meter systems.

Although the present invention has been described in connection with the specified embodiments, it is not intended to be limited to the specific form set forth herein. Rather, the scope of the present invention is limited only by the accompanying claims. In the claims, the term "comprising" or "including" does not exclude the presence of other elements. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. Energy calculator for calculating an amount of consumed energy (H), the calculator comprising
- first and second temperature inputs (T1_in, T2_in) arranged to receive respective first and second data representing temperatures from respective associated temperature sensors (T1, T2),
- a flow input (F_in) arranged to receive data representing a flow from an associated flow meter (F), and
- a processor unit (PU) arranged to calculate the amount of consumed energy (H) based on data received via the first and second temperature inputs (T1_in, T2_in) and data received via the flow input (F_in),
wherein the calculator is arranged to receive additional data from the associated flow meter (F), and wherein the processor unit (PU) is arranged to detect an installation error based on the additional data from the associated flow meter (F).

2. Calculator according to claim 1, further arranged to generate an error signal (E) upon detection of an installation error.

3. Calculator according to claim 1 or 2, wherein the additional data includes data representing a flow medium temperature detected by the flow meter (F), and wherein the flow medium temperature is used in the detection of an installation error.

4. Calculator according to any of the preceding claims, wherein the additional data includes data representing a direction of the flow measured by the flow meter (F), and wherein the flow direction is used in the detection of an installation error.

5. Calculator according to any of the preceding claims, wherein the additional data includes data representing at least one of: a sound velocity, and a sound transmission time associated with the data representing the flow.

6. Calculator according to claim 5, wherein the calculator is arranged to calculate a flow medium temperature associated with the flow meter (F) based on the data representing the sound velocity or the sound transmission time, and wherein the flow medium temperature is used in the detection of an installation error.

7. Calculator according to any of the preceding claims, arranged to receive the additional data from the flow meter via the flow input (F_in).

8. Calculator according to any of the preceding claims, wherein the flow input (F_in) is arranged to receive the data representing a flow and the additional data on one common line (CL).

9. Calculator according to any of the preceding claims, arranged to take into account at least one of the first and second temperature data in the detection of an installation error.

10. Calculator according to any of the preceding claims, wherein the calculator is arranged to detect two or more different types of installation errors, wherein the additional data includes data representing a flow direction and data representing a flow medium temperature measured by the flow meter (F), and wherein both of the flow direction and flow medium temperature are used to detect an error in installation of the flow meter (F).

11. Calculator according to any of the preceding claims, including an installation error indicator (EI, D) arranged to inform a user about a detected installation error.

12. Calculator according to any of the preceding claims, wherein the processor unit (PU) is arranged to reconfigure a calculation procedure for calculating the amount of consumed energy (H) based on a detected installation error.

13. Heat meter for determining an amount of consumed heat (H), the heat meter including
- a flow meter (F) arranged to measure a flow and generate data representing the flow, the flow meter (F) further being arranged to generate additional data,
- first and second temperature sensors (T1, T2) arranged to measure respective first and second temperatures and generate respective first and second data representing the respective first and second temperatures, and
- an energy calculator according to any of the preceding claims, wherein the calculated amount of consumed energy represents the amount of consumed heat (H).

14. Heat meter according to claim 13, wherein the flow meter (F) includes a temperature sensor (FT) arranged to measure a flow medium temperature where the flow is measured, and wherein the additional data flow meter (F) is arranged to include data representing the flow medium temperature in the additional data.

15. Heat meter according to claim 13 or 14, wherein the flow meter (F) is an ultrasonic flow meter (F), and wherein at least one ultrasound transducer of the ultrasonic flow meter (F) is used to determine data representing a flow medium temperature.

16. Heat meter according to any of claims 14 or 15, wherein the flow meter (F) is arranged to include in the additional data at least one of: data representing an ultrasound velocity associated with the flow and data representing an ultrasound transit time associated with the flow.

17. Heat meter according to any of claims 13-16, wherein the energy calculator and the flow meter (F) are arranged for interconnection by one line (CL) for transfer of data representing the flow and the additional data.

18. Heat meter according to any of claims 13-17, including a communication module arranged to transmit data representing a detected installation error (E) to an external receiver.

19. Heat meter according to claim 18, wherein the communication module is arranged to transmit data (H, E) via at least one of: wireless Radio Frequency signals, an electric supply net, and a dedicated communication wire.
